# EUROPÄISCHE PATENTSCHRIFT

(11) **EP 2 969 867 B1**
(45) Veröffentlichungstag und Bekanntmachung des Hinweises auf die Patenterteilung: **10.07.2019**
(21) Anmeldenummer: 14719193.6
(22) Anmeldetag: 14.03.2014
(51) Int. Cl.: B65G 49/04

(54) **VORRICHTUNG UND VERFAHREN ZUM TAUCHLACKIEREN GROSSER KAROSSERIEN**
DEVICE AND METHOD FOR DIP-COATING LARGE VEHICLE BODIES
DISPOSITIF ET PROCÉDÉ DE VERNISSAGE PAR IMMERSION DE GRANDES CARROSSERIES

(30) Priorität: 15.03.2013 AT 501802013
(43) Veröffentlichungstag der Anmeldung: 20.01.2016
(73) Patentinhaber: AUTOMOTIVE ENGINEERING CORPORATION, Nankai District Tianjin (CN); SCIVIC Engineering Corporation, Jianxi District Luoyang (CN)
(72) Erfinder: FEHBERGER, Alex, 8724 Spielberg (AT)
(74) Vertreter: Wirnsberger, Gernot
(86) Internationale Anmeldenummer: PCT/AT2014/050065
(87) Internationale Veröffentlichungsnummer: WO 2014/138768

(56) Entgegenhaltungen:
- EP-A1- 1 426 314
- WO-A1-2011/085984
- WO-A1-2011/123878

## Beschreibung

Die Erfindung betrifft eine Vorrichtung nach dem Oberbegriff des Anspruchs 1 zum Befördern eines Gegenstandes, insbesondere einer Karosserie, entlang einer Behandlungsstrecke, umfassend einen in einer Transportrichtung entlang der Behandlungsstrecke bewegbaren Transportwagen mit einem oder mehreren Rollelementen und mit einem Antrieb sowie eine Drehwelle, auf der eine Halterung für den zu behandelnden Gegenstand befestigt ist, wobei die Drehwelle an einem ersten Ende am Transportwagen gelagert ist und am zweiten Ende ein drehbares Stützelement aufweist.

Des Weiteren betrifft die Erfindung eine Verwendung einer derartigen Vorrichtung.

Ferner betrifft die vorliegende Erfindung ein Verfahren nach dem Oberbegriff des Anspruchs 12 zum Befördern eines Gegenstandes, insbesondere einer Karosserie, entlang einer Behandlungsstrecke, wobei ein Transportwagen mit einem oder mehreren Rollelementen und mit einem Antrieb sowie einer Drehwelle, auf der eine Halterung für den zu behandelnden Gegenstand befestigt ist, wobei die Drehwelle an einem ersten Ende am Transportwagen gelagert ist und am zweiten Ende ein drehbares Stützelement aufweist, in einer Transportrichtung entlang der Behandlungsstrecke bewegt wird.

Eine oben erwähnte Behandlungsstrecke umfasst zumindest eine, meist mehrere Stationen zur Oberflächenbehandlung eines Gegenstandes, wie z. B. einer Fahrzeugkarosserie. Bei den Stationen kann es sich z. B. um Tauchbäder mit verschiedenen Behandlungsflüssigkeiten handeln, in welche die Karosserien zum Lackieren eingetaucht werden. Dabei sollten auch große Karosserien möglichst stabil, platzsparend und kostengünstig transportierbar sein.

Gemäß dem Stand der Technik sind verschiedene Anlagen zum Befördern von Karosserien entlang einer Behandlungsstrecke bekannt.

Die WO 2011/123878 A1 offenbart eine Vorrichtung nach dem Oberbegriff des Anspruchs 1 und ein Verfahren zum Tauchlackieren einer Karosserie nach dem Oberbegriff des Anspruchs 12.

Vorrichtungen zum Befördern von Karosserien von Pkws umfassen üblicherweise einen Transportwagen, an dem eine Drehwelle mit einer Halterung für den zu behandelnden Gegenstand befestigt ist und an deren dem Transportwagen gegenüberliegenden Ende ein Stützelement passiv mitbewegt wird. Beim Befördern einer größeren Karosserie, wie beispielsweise einer Karosserie eines Busses oder Lkws, ergibt sich durch dieses passive Ende der Drehwelle ein Stabilisierungsproblem. Das passiv geführte Stützelement kann die auftretenden Kräfte nicht ausgleichen bzw. das große Gewicht nicht lagestabil abstützen. Eine Vorrichtung zum Befördern von Autos bzw. kleinerer Gegenstände ist somit für größere Gegenstände nicht geeignet bzw. mit einem größeren Gegenstand unmanövrierbar. Des Weiteren weist die Halterung meist einen oder mehrere Kippmechanismen auf. Infolgedessen wird die Halterung beim Drehen der Drehwelle nicht nur mitgedreht, sondern auch gleichzeitig gekippt. Bei großen Karosserien hat das zur Folge, dass das passive Stützelement die Kräfte, die beim Eintauchvorgang und somit beim Drehen der Drehwelle und Kippen bzw. Eindrehen der Halterung auftreten, nicht halten kann. Daher kann es dabei zu einem unerwünschten Verkippen des zu behandelnden Gegenstandes und insbesondere der Drehwelle kommen. Um diesen Nachteil der Vorrichtung auszugleichen, wird üblicherweise anstatt des passiven Stützelements ein zweiter Transportwagen am zweiten Ende der Drehwelle angebracht. Eine solche Vorrichtung hat aber den Nachteil, dass diese sehr groß ist und damit viel Platz beansprucht. Durch den zweiten Transportwagen ist die Vorrichtung weiter schwer zugänglich für z. B. Absprühvorgänge oder etwaige Reparaturarbeiten. Außerdem ist durch den zweiten Transportwagen ein nicht unwesentlicher Mehraufwand an Steuerungselektronik notwendig.

Aufgabe der Erfindung ist es, die mit den oben beschriebenen Vorrichtungen verbundenen Nachteile zu beseitigen oder zumindest zu verringern. Insbesondere liegt der Erfindung die Aufgabe zugrunde, eine Vorrichtung sowie ein Verfahren der eingangs genannten Art anzugeben, mit der bzw. dem große Gegenstände wie Karosserien von Bussen und Lkws platzsparend, jedoch mit ausreichender Stabilisierung entlang einer Behandlungsstrecke befördert werden können. Dies soll mit einer einfachen und somit kostengünstigen, aber effizienten Fördervorrichtung erreicht werden.

Die Lösung dieser Aufgabe erfolgt durch eine Vorrichtung mit den Merkmalen des Anspruchs 1 und durch ein Verfahren mit den Merkmalen des Anspruchs 12.

Mit der Erfindung erzielte Vorteile sind insbesondere darin zu sehen, dass die Vorrichtung nur einen Transportwagen aufweist und somit platzsparend und kostengünstig ist. Sollen große Karosserien befördert und tauchlackiert werden, umfasst die Vorrichtung dazu bevorzugt mehrere Rollelemente, um das große Gewicht gleichmäßig und stabilisierend zu verteilen. Durch das, mit demselben Antrieb wie die Rollelemente angetriebene, drehbare Stützelement kann die Vorrichtung ausreichend stabilisiert werden. Die Kräfte, welche bei der Beschleunigung bzw. beim Abbremsen des Transportwagens auftreten, werden somit auf beide Enden der Drehwelle verteilt. Ein ungewolltes Verkippen der Halterung mitsamt dem zu behandelnden Gegenstand beim Abbremsen und Eintauchen wird dadurch vermieden, dass das drehbare Stützelement auch abbremsbar und damit arretierbar ist.

Alternativ können insbesondere für kleinere Karosserien wie Pkws nur ein Rollelement und das drehbare Stützelement angetrieben sein, wobei das Rollelement etwa mittig an einer Unterseite des Transportwagens angeordnet ist. Auch bei dieser Anordnung sind die beim Eintauchen oder Abbremsen auftretenden Kräfte auf beide Enden der Drehwelle verteilt.

Ein weiterer Vorteil ist, dass das drehbare Stützelement mittels eines Übertragungsmittels, insbesondere einer Übertragungsstange, mit dem Antrieb verbunden ist und somit direkt vom gleichen Antrieb wie die Rollelemente angesteuert und angetrieben werden kann.

Zweckmäßigerweise ist die Drehwelle hohl und das Übertragungsmittel im Inneren der hohlen Drehwelle geführt, sodass kein weiterer Platz für das Übertragungsmittel erforderlich ist.

Mit Vorteil ist vorgesehen, dass sich vorzugsweise im Bereich unter der Halterung in der hohlen Drehwelle eine Lagerung zur Stabilisierung des Übertragungsmittels befindet, welche ein Durchbiegen bzw. nach längerer Anwendungszeit ein mögliches Brechen dieser verhindert.

Des Weiteren ist es von Vorteil, dass der Antrieb mittels Riemenübersetzung mit den Rollelementen und dem drehbaren Stützelement in Verbindung steht. Somit sollte die Übersetzung ohne Schmiermittel auskommen, was eine Verunreinigung der Behandlungsflüssigkeit mit Öl oder dergleichen verhindert. Ein Riemenantrieb kann auch nicht korrodieren. Somit verringern sich die Wartungskosten.

Allgemein ist es aber auch möglich, andere Zugmittel anstelle von Riemen einzusetzen. Beispielsweise können Ketten eingesetzt werden. Insbesondere bei schweren Lasten können Ketten einen Vorteil darstellen, zumal Ketten gegebenenfalls auch schmiermittelfrei betreibbar sind.

Es hat sich bewährt, dass die Halterung für den zu behandelnden Gegenstand drehfest an der Drehwelle befestigt und zusammen mit der Drehwelle um deren Längsachse drehbar ist. Eine solche Bauweise wirkt wiederum auf die gesamte Vorrichtung stabilisierend; die Halterung kann beim Drehen der Drehwelle nicht kippen und ist somit auch für große Gegenstände stabil.

Gemäß einer Ausführungsvariante ist es weiter von Vorteil, dass zum Antreiben der Drehwelle ein eigener Antrieb vorgesehen ist, welcher sich auf dem Transportwagen befindet und mittels Riemen zur Drehwelle übersetzt. Somit kann die Drehung der Drehwelle völlig unabhängig von der Bewegung des Transportwagens erfolgen.

Es ist von Vorteil, wenn am Transportwagen zumindest eine Stützrolle angeordnet ist, wobei die Stützrolle drehbar gelagert ist. Erfindungsgemäß können dabei zwei Stützrollen vorgesehen sein, welche in Transportrichtung vor und hinter dem Rollelement angeordnet drehbar gelagert sind, sodass der Transportwagen auf einer Behandlungsstrecke einsetzbar ist, welche Kurven umfasst. Erfindungsgemäß kann vorgesehen sein, dass die Stützrolle an einer unteren Seite Führungsrollen aufweist, welche links- und rechtsseitig einer L-förmig ausgebildeten Schiene der Behandlungsstrecke gelagert sind. An einer oberen Seite ist die Stützrolle dabei drehbar am Transportwagen gelagert.

Vorteilhaft ist weiter, wenn ein zweites Übertragungsmittel vom Transportwagen bis zu einer Position unterhalb der Halterung geführt ist. Das zweite Übertragungsmittel übersetzt dabei von einem am Transportwagen gelagerten Schwenkantrieb zur Halterung, sodass diese eine daran befestigte Karosserie im Tauchbad schwenken kann, um etwaige Luftbläschen oder dergleichen, welche sich beim Tauchvorgang bilden, von der Karosserie zu entfernen.

Günstig ist es dabei, wenn das zweite Übertragungsmittel im Inneren der Drehwelle geführt ist, um die Vorrichtung möglichst kompakt zu halten.

Sehr effektiv ist es weiter, wenn das zweite Übertragungsmittel hohl ausgebildet ist und in dessen Innerem die Übertragungsstange geführt ist, um platzsparend zu agieren.

Eine Verwendung der erfindungsgemäßen Vorrichtung erfolgt typischerweise beim Tauchlackieren von Karosserien.

Die Lösung der verfahrensmäßigen Aufgabe erfolgt durch die Merkmale des Anspruchs 12.

Verfahrensmäßig wird bevorzugt, dass das drehbare Stützelement beim Drehen der Drehwelle gemeinsam mit zumindest einem Rollelement abgebremst wird.

Es ist von Vorteil, wenn die Halterung beim Tauchvorgang geschwenkt wird, um etwaige Luftbläschen oder dergleichen vom Lack eines zu lackierenden Gegenstandes zu entfernen. Zur Steuerung dieser Schwenkbewegung wird im Inneren der Drehwelle ein zweites Übertragungsmittel von einem am Transportwagen gelagerten Schwenkantrieb bis zu einer Position unter der Halterung geführt, welches hohl ausgebildet ist. Im hohlen zweiten Übertragungsmittel wird die Übertragungsstange geführt, um die Vorrichtung kompakt zu halten.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig.1 und 2 je eine perspektivische Darstellung einer erfindungsgemäßen Vorrichtung mit aufgeschnittener Ansicht der Drehwelle;
Fig. 3 eine weitere erfindungsgemäße Vorrichtung mit aufgeschnittener Drehwelle;
Fig. 4 eine Behandlungsstrecke;
Fig. 5 eine Ansicht einer Stützrolle einer Vorrichtung gemäß Fig. 3.

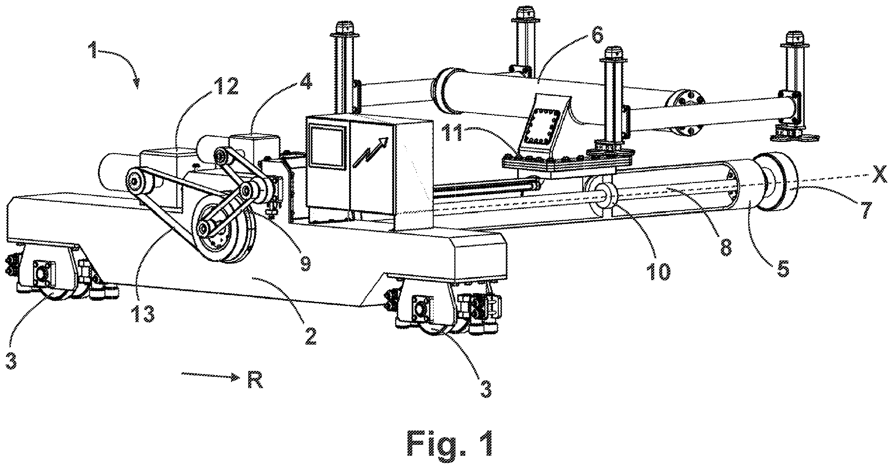

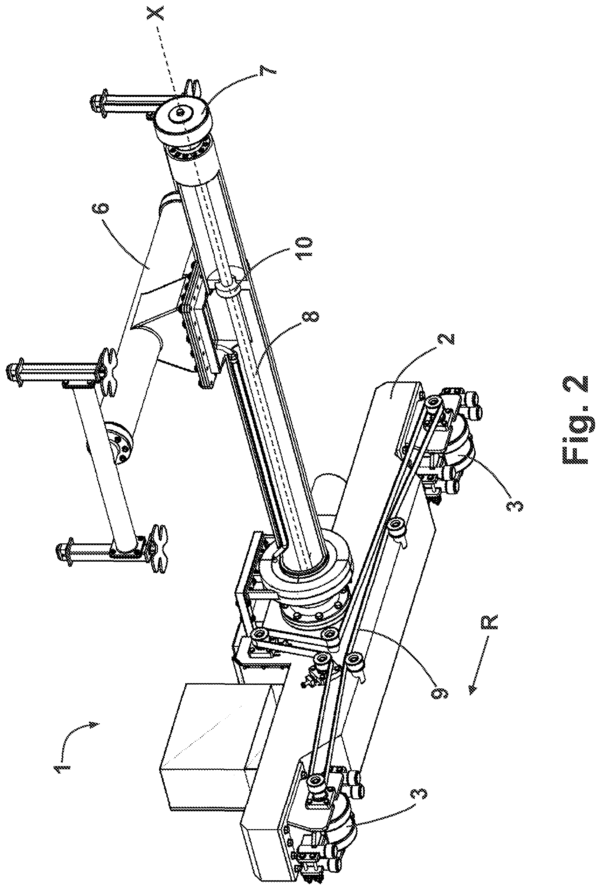

Zwei perspektivische Gesamtansichten der Ausführungsform einer erfindungsgemäßen Vorrichtung 1 sind in Fig. 1 und 2 dargestellt. Die Vorrichtung 1 umfasst als Grundbestandteile einen Transportwagen 2, Rollelemente 3, ein drehbares Stützelement 7, eine Drehwelle 5, eine Übertragungsstange 8 und eine Halterung 6. Der Transportwagen 2 ist entlang einer Transportrichtung R mittels Rollelementen 3 und drehbarem Stützelement 7 bewegbar, z. B. entlang von Schienen oder anderen Führungsmitteln, die neben einem Tauchbecken angeordnet sind. Die Drehwelle 5 ist waagrecht angeordnet und an einem ersten Ende im rechten Winkel am Transportwagen 2 befestigt. Die Halterung 6 ist drehfest im Bereich 11 an der Drehwelle 5 etwa mittig derselben angebracht und kann mit dieser um deren Längsachse X gedreht werden. Die Drehwelle 5 ist hohl. Im Inneren der Drehwelle 5 ist ein Übertragungsmittel, im Ausführungsbeispiel ausgeführt als Übertragungsstange 8, geführt und ebenfalls waagrecht und im rechten Winkel zur Transportrichtung R angebracht. Vorzugsweise in einem Bereich unter der Halterung 6 in der hohlen Drehwelle 5 befindet sich eine Lagerung 10 zur Stabilisierung des Übertragungsmittels. An einem zweiten Ende der Drehwelle 5 ist ein drehbares Stützelement 7 vorgesehen. Ferner ist ein Antrieb 4 vorgesehen, der mit den Rollelementen 3 und dem drehbaren Stützelement 7 in Verbindung steht. Der Antrieb 4 befindet sich auf dem Transportwagen 2 und wird mittels Riemenübersetzung 9 sowohl zu den Rollelementen 3 als auch zum Stützelement 7 übersetzt, wobei eine Verbindung zum Stützelement 7 durch das im Inneren der Drehwelle 5 geführte und gelagerte Übertragungsmittel erfolgt. Ein eigener Antrieb 12, welcher ebenfalls am Transportwagen 2 positioniert ist, übersetzt wiederum mittels Riemen 13 zur Drehwelle 5. Der Antrieb 4 treibt die Rollelemente 3 und das drehbare Stützelement 7 gleichzeitig an, wodurch die Vorrichtung 1 entlang der Transportrichtung R ruhig laufend bewegbar ist.

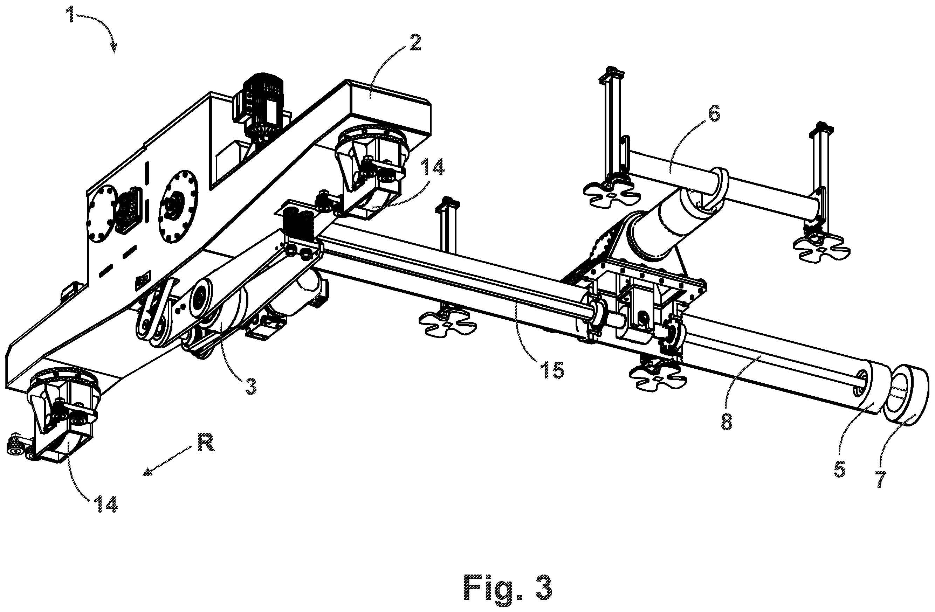

Fig. 3 zeigt eine weitere erfindungsgemäße Vorrichtung 1. In diesem Ausführungsbeispiel umfasst die Vorrichtung 1 nur ein Rollelement 3 und ist deshalb bevorzugt zum Tauchlackieren von kleinen bzw. leichten Karosserien wie Pkws geeignet. Das Gewicht einer Pkw-Karosserie kann problemlos von einem angetriebenen Rollelement 3 und dem angetriebenen Stützelement 7 getragen werden. Zusätzlich zum angetriebenen Rollelement 3 sind am Transportwagen 2 zwei Stützrollen 14 angeordnet, welche nicht angetrieben sind. Die Stützrollen 14 sind dabei drehbar gelagert, sodass der Transportwagen 2 entlang der Transportrichtung R um Kurven fahren kann. Bevorzugt sind diese in Transportrichtung R vor und hinter dem Rollelement 3 an den zwei Enden des Transportwagens 2 an dessen Unterseite gelagert, um das Gewicht der Vorrichtung 1 selbst und einer an dieser angebrachten Karosserie möglichst gleichmäßig zu verteilen.

Die in der Fig. 3 gezeigte Vorrichtung 1 umfasst weiter ein zweites Übertragungsmittel 15, welches von einem Schwenkantrieb auf dem Transportwagen 2 zur Halterung 6 übersetzt, damit diese eine Schwenkbewegung ausführen kann. Durch die Schwenkbewegung im Tauchbad ist es möglich, Lüftbläschen aus dem Lack an der Karosserie zu entfernen. Zweckmäßig ist das zweite Übertragungsmittel 15 nur bis zu einer Position unterhalb der Halterung 6 geführt, welche üblicherweise etwa in einer Mitte der Drehwelle 5 an dieser angeordnet ist. Das zweite Übertragungsmittel 15 ist hohl ausgebildet, wobei die Übertragungsstange 8 darin geführt ist. Das zweite Übertragungsmittel 15 mit der Übertragungsstange 8 ist in der hohlen Drehwelle 5 geführt, um die Vorrichtung 1 möglichst kompakt zu halten. Auch eine Vorrichtung 1 gemäß dem Ausführungsbeispiel der Fig. 1 und 2 ist mit dem zusätzlichen Schwenkantrieb ausstattbar, vorausgesetzt, dass eine Stabilität dieser durch die weitere Bewegung eines schweren Gegenstandes nicht herabgesetzt ist.

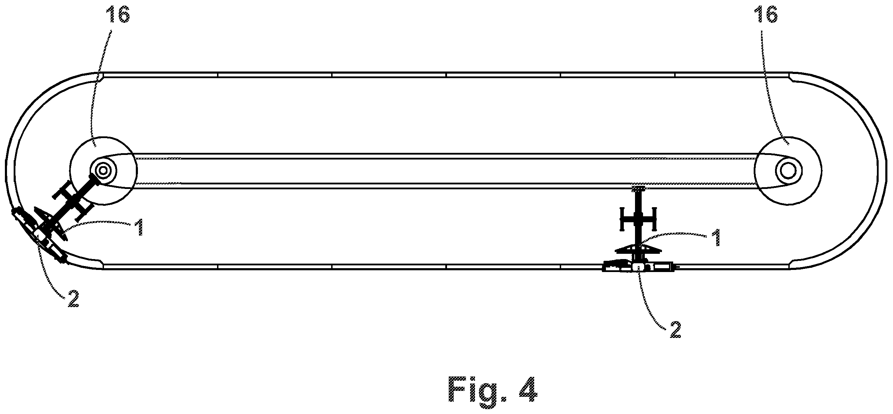

Fig. 4 zeigt eine Behandlungsstrecke mit Kurven, auf welcher eine Vorrichtung 1 gemäß Fig. 3 einsetzbar ist. In Fig. 4 sind zwei Vorrichtungen 1 dabei so auf der Behandlungsstrecke platziert, dass der Transportwagen 2 an einem außenseitigen Teil dieser angeordnet ist. Das hat zur Folge, dass dieser bzw. das an diesem angebrachte Rollelement 3 in einer Kurve eine längere Strecke zurücklegen muss, als das Stützelement 7. Um diesen Längenunterschied auszugleichen, ist in einem Innenbereich der Kurve ein Umlaufrädergetriebe 16 angeordnet. Die frei mitlaufenden Stützrollen 14 richten sich selbstständig entsprechend der Kurven aus.

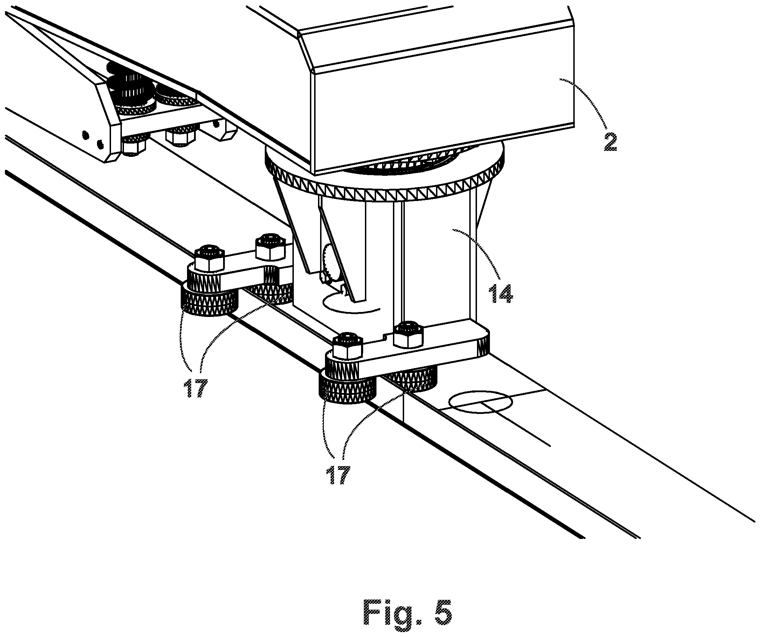

Eine mögliche Ausbildungsvariante der frei mitlaufenden Stützrollen 14 ist in Fig. 5 gezeigt. Die Stützrollen 14 sind an einer Unterseite des Transportwagens 2 drehbar gelagert. Am anderen Ende der Stützrollen 14, welches zur Behandlungsstrecke hin ausgerichtet ist, weisen diese zumindest ein Paar Führungsrollen 17 auf. In Fig. 5 sind zwei Paar Führungsrollen 17 gezeigt und an beiden Seiten eines kürzeren Teils einer L-förmig ausgebildeten Schiene der Behandlungsstrecke angeordnet und laufen frei mit.

Eine Vorrichtung 1 gemäß Fig. 1 und 2 wird bevorzugt beim Tauchlackieren von großen Karosserien eingesetzt. Dabei wird die Vorrichtung 1 entlang einer Behandlungsstrecke bewegt, die beispielsweise auch ein Behandlungsbecken mit einem Lack umfasst. Die Vorrichtung 1 wird zum Behandlungsbecken bewegt, wobei der Antrieb 4 sowohl die Rollelemente 3 als auch das drehbare Stützelement 7 antreibt. Beim Eintauchvorgang der Halterung 6 mit dem zu behandelnden Gegenstand wird der Antrieb 12 in Bewegung versetzt und damit auch die Drehwelle 5, um die Halterung 6 samt Karosserie so zu drehen, dass die Karosserie in das Behandlungsbecken eingedreht wird. Dabei bzw. zuvor werden sowohl die Rollelemente 3 als auch das drehbare Stützelement 7 gleichzeitig vom Antrieb 4 bzw. dem zugehörigen Motor abgebremst, sodass die Drehwelle 5 beim Eindrehvorgang optimal stabilisiert ist.

Eine Vorrichtung 1 gemäß Fig. 3 kann auch auf einer Behandlungsstrecke mit Kurven, wie z. B. in Fig. 4 dargestellt, eingesetzt werden, da diese bewegbar gelagerte Stützrollen 14 aufweist, welche passiv mitbewegt werden. Ein Eintauchvorgang funktioniert prinzipiell ähnlich dem einer Vorrichtung 1 gemäß Fig. 1 und 2, mit dem Unterschied, dass mit dieser Vorrichtung 1 zusätzlich eine Schwenkbewegung ausgeführt werden kann. Wird die Karosserie in das Behandlungsbecken eingetaucht, wird über das zweite Übertragungsmittel 15 die Halterung 6 so angesteuert, dass diese die daran angebrachte Karosserie schwenkt.

## Patentansprüche

1. Vorrichtung (1) zum Befördern eines Gegenstandes, insbesondere einer Karosserie, entlang einer Behandlungsstrecke, umfassend einen in einer Transportrichtung (R) entlang der Behandlungsstrecke bewegbaren Transportwagen (2) mit einem oder mehreren Rollelementen (3) und mit einem Antrieb (4) sowie eine Drehwelle (5), auf der eine Halterung (6) für den zu behandelnden Gegenstand befestigt ist, wobei die Drehwelle (5) an einem ersten Ende am Transportwagen (2) gelagert ist und am zweiten Ende ein drehbares Stützelement (7) aufweist, wobei ein Übertragungsmittel, insbesondere eine Übertragungsstange (8), vorgesehen ist, welche den Antrieb (4) mit dem drehbaren Stützelement (7) verbindet, **dadurch gekennzeichnet, dass** der Antrieb (4) zumindest ein Rollelement (3) und das drehbare Stützelement (7) gemeinsam antreibt.

2. Vorrichtung (1) nach Anspruch 1, **dadurch gekennzeichnet, dass** die Drehwelle (5) hohl ist und das Übertragungsmittel im Inneren der hohlen Drehwelle (5) geführt ist.

3. Vorrichtung (1) nach Anspruch 1 oder 2, **dadurch gekennzeichnet, dass** sich vorzugsweise in einem Bereich unter der Halterung (6) in der hohlen Drehwelle (5) eine Lagerung (10) zur Stabilisierung des Übertragungsmittels befindet.

4. Vorrichtung (1) nach einem der Ansprüche 1 bis 3, **dadurch gekennzeichnet, dass** der Antrieb (4) mittels einer Riemenübersetzung (9) mit den Rollelementen (3) und dem drehbaren Stützelement (7) in Verbindung steht.

5. Vorrichtung (1) nach einem der Ansprüche 1 bis 4, **dadurch gekennzeichnet, dass** die Halterung (6) für den zu behandelnden Gegenstand drehfest an der Drehwelle (5) befestigt und zusammen mit der Drehwelle (5) um deren Längsachse (X) drehbar ist.

6. Vorrichtung (1) nach Anspruch 5, **dadurch gekennzeichnet, dass** zum Antreiben der Drehwelle (5) ein eigener Antrieb (12) vorgesehen ist, welcher sich auf dem Transportwagen (2) befindet und mittels Riemen (13) zur Drehwelle (5) übersetzt.

7. Vorrichtung (1) nach einem der Ansprüche 1 bis 6, **dadurch gekennzeichnet, dass** am Transportwagen (2) zumindest eine Stützrolle (14) angeordnet ist, wobei die Stützrolle (14) drehbar gelagert ist.

8. Vorrichtung (1) nach einem der Ansprüche 1 bis 7, **dadurch gekennzeichnet, dass** ein zweites Übertragungsmittel (15) vom Transportwagen (2) bis zu einer Position unterhalb der Halterung (6) geführt ist.

9. Vorrichtung (1) nach Anspruch 8, **dadurch gekennzeichnet, dass** das zweite Übertragungsmittel (15) im Inneren der Drehwelle (5) geführt ist.

10. Vorrichtung (1) nach Anspruch 9, **dadurch gekennzeichnet, dass** das zweite Übertragungsmittel (15) hohl ausgebildet ist und in dessen Innerem die Übertragungsstange (8) geführt ist.

11. Verwendung einer Vorrichtung (1) nach einem der Ansprüche 1 bis 10 zum Tauchlackieren von Karosserien.

12. Verfahren zum Befördern eines Gegenstandes, insbesondere einer Karosserie, entlang einer Behandlungsstrecke, wobei ein Transportwagen (2) mit einem oder mehreren Rollelementen (3) und mit einem Antrieb (4) sowie einer Drehwelle (5), auf der eine Halterung (6) für den zu behandelnden Gegenstand befestigt ist, wobei die Drehwelle (5) an einem ersten Ende am Transportwagen (2) gelagert ist und am zweiten Ende ein drehbares Stützelement (7) aufweist, wobei ein Übertragungsmittel, insbesondere eine Übertragungsstange (8), vorgesehen ist, welche den Antrieb (4) mit dem drehbaren Stützelement (7) verbindet, in einer Transportrichtung (R) entlang der Behandlungsstrecke bewegt wird, **dadurch gekennzeichnet, dass** zumindest ein Rollelement (3) und das drehbare Stützelement (7) durch den Antrieb (4) gemeinsam angetrieben werden.

13. Verfahren nach Anspruch 12, **dadurch gekennzeichnet, dass** das drehbare Stützelement (7) beim Drehen der Drehwelle (5) gemeinsam mit zumindest einem Rollelement (3) abgebremst wird.

14. Verfahren nach Anspruch 12 oder 13, **dadurch gekennzeichnet, dass** die Halterung (6) beim Tauchvorgang geschwenkt wird.

## Claims

1. A device (1) for transporting an object, in particular a car body, along a processing station comprising a transport trolley (2) that can be moved along the processing station in a transport direction (R) having one or a plurality of rolling elements (3) and having a drive (4) and also a rotating shaft (5) on which a mount (6) for the object to be treated is secured, wherein the rotating shaft (5) is mounted at a first end on the transport trolley (2) and has a rotatable support element (7) at the second end, wherein a transmission means, in particular a transmission rod (8), is provided which connects the drive (4) to the rotatable support element (7), **characterized in that** the drive (4) jointly drives at least one rolling element (3) and the rotatable support element (7).

2. The device (1) according to claim 1, **characterized in that** the rotating shaft (5) is hollow and the transmission means is guided inside the hollow rotating shaft (5).

3. The device (1) according to claim 1 or 2, **characterized in that** there is a bearing (10) for stabilizing the transmission means preferably in a region below the mount (6) in the hollow rotating shaft (5).

4. The device (1) according to one of claims 1 to 3, **characterized in that** the drive (4) is connected by means of a belt transmission (9) to the roller elements (3) and the rotatable support element (7) .

5. The device (1) according to one of claims 1 to 4, **characterized in that** the mount (6) is secured to the rotating shaft (5) in a non-rotational manner for the object to be treated and is rotatable along with the rotating shaft (5) about the longitudinal axis (X) thereof.

6. The device (1) according to claim 5, **characterized in that** in order to drive the rotating shaft (5) a separate drive (12) is provided which is located on the transport trolley (2) and transmits by means of a belt (13) to the rotating shaft (5).

7. The device (1) according to one of claims 1 to 6, **characterized in that** at least one supporting roller (14) is arranged on the transport trolley (2), wherein the supporting roller (14) is mounted rotatably.

8. The device (1) according to one of claims 1 to 7, **characterized in that** a second transmission means (15) is guided from the transport trolley (2) to a position below the mount (6).

9. The device (1) according to claim 8, **characterized in that** the second transmission means (15) is guided inside the rotational shaft (5).

10. The device (1) according to claim 9, **characterized in that** the second transmission means (15) has a hollow design and the transmission rod (8) is guided in the inside thereof.

11. Use of a device (1) according to one of claims 1 to 10 for the dipping of car bodies.

12. A method for transporting an object, in particular a car body, along a processing plant, wherein a transport trolley (2) having one or a plurality of rolling elements (3) and having a drive (4) and also a rotating shaft (5), on which a mount (6) for the object to be treated is secured, wherein the rotating shaft (5) is mounted at a first end on the transport trolley (2) and has a rotatable support element (7) at the second end, wherein a transmission means, in particular a transmission rod (8), is provided which connects the drive (4) to the rotatable support element (7), is moved in a transport direction (R) along the processing plant, **characterized in that** at least one rolling element (3) and the rotatable support element (7) are jointly driven by the drive (4).

13. The method according to claim 12, **characterized in that** the rotatable support element (7) is braked during rotation of the rotating shaft (5) along with at least one rolling element (3).

14. The method according to claim 12 or 13, **characterized in that** the mount (6) is pivoted during the dipping action.

## Revendications

1. Dispositif (1) de transport d'un objet, en particulier d'une carrosserie, le long d'un parcours de traitement, comprenant un chariot de transport (2) mobile dans un sens de transport (R) le long du parcours de traitement et comportant plusieurs éléments de roulement (3) et un organe de commande (4) ainsi qu'un arbre rotatif (5) sur lequel un support (6) pour l'objet à traiter est fixé, l'arbre rotatif (5) s'appuyant par une première extrémité au niveau du chariot de transport (2) et présentant à la seconde extrémité un élément d'appui rotatif (7), étant prévu un moyen de transfert, en particulier une barre de transfert (8), qui raccorde l'organe de commande (4) à l'élément d'appui rotatif (7), **caractérisé en ce que** l'organe de commande (4) entraîne conjointement au moins un élément de roulement (3) et l'élément d'appui rotatif (7).

2. Dispositif (1) selon la revendication 1, **caractérisé en ce que** l'arbre rotatif (5) est creux et que l'élément de transfert est guidé à l'intérieur de l'arbre rotatif creux (5).

3. Dispositif (1) selon la revendication 1 ou 2, **caractérisé en ce qu'**un palier (10) permettant de stabiliser le moyen de transfert se trouve de préférence dans une zone située sous le support (6) dans l'arbre rotatif creux (5).

4. Dispositif (1) selon une des revendications 1 à 3, **caractérisé en ce que** l'organe de commande (4) est en liaison au moyen d'une transmission par courroie (9) avec les éléments de roulement (3) et l'élément d'appui rotatif (7).

5. Dispositif (1) selon une des revendications 1 à 4, **caractérisé en ce que** le support (6) pour l'objet à traiter est fixé de manière fixe en rotation à l'arbre rotatif (5) et peut tourner avec l'arbre rotatif (5) autour de son axe longitudinal (X).

6. Dispositif (1) selon la revendication 5, **caractérisé en ce que**, pour entraîner l'arbre rotatif (5), il est prévu un organe de commande propre (12) qui se trouve sur le chariot de transport (2) et assure la transmission avec l'arbre rotatif (5) au moyen de courroies (13).

7. Dispositif (1) selon une des revendications 1 à 6, **caractérisé en ce qu'**est disposé au niveau du chariot de transport (2) au moins un rouleau d'appui (14), le rouleau d'appui (14) s'appuyant en rotation.

8. Dispositif (1) selon une des revendications 1 à 7, **caractérisé en ce qu'**un second moyen de transfert (15) est guidé depuis le chariot de transport (2) jusqu'à une position située en dessous du support (6) .

9. Dispositif (1) selon la revendication 8, **caractérisé en ce que** le second moyen de transfert (15) est guidé à l'intérieur de l'arbre rotatif (5) .

10. Dispositif (1) selon la revendication 9, **caractérisé en ce que** le second moyen de transfert (15) a une conformation creuse et que la barre de transfert (8) est guidée à l'intérieur de celui-ci.

11. Utilisation d'un dispositif (1) selon une des revendications 1 à 10 pour la peinture par trempage de carrosseries.

12. Procédé de transport d'un objet, en particulier d'une carrosserie, le long d'un parcours de traitement, dans lequel un chariot de transport (2) comportant plusieurs éléments de roulement (3) et un organe de commande (4) ainsi qu'un arbre rotatif (5) sur lequel un support (6) pour l'objet à traiter est fixé, l'arbre rotatif (5) s'appuyant par une première extrémité au niveau du chariot de transport (2) et présentant à la seconde extrémité un élément d'appui rotatif (7), est déplacé dans un sens de transport (R) le long du parcours de traitement, étant prévu un moyen de transfert, en particulier une barre de transfert (8), qui raccorde l'organe de commande (4) à l'élément d'appui rotatif (7), **caractérisé en ce qu'**au moins un élément de roulement (3) et l'élément d'appui rotatif (7) sont entraînés conjointement par l'organe de commande (4).

13. Procédé selon la revendication 12, **caractérisé en ce que** l'élément d'appui rotatif (7), lors de la rotation de l'arbre rotatif (5) est freiné conjointement avec au moins un élément de roulement (3).

14. Procédé selon la revendication 12 ou 13, **caractérisé en ce que** le support (6) est pivoté lors du processus de trempage.
